# EUROPÄISCHE PATENTANMELDUNG

(11) **EP 4 553 341 A1**
(43) Veröffentlichungstag der Anmeldung: **14.05.2025**
(21) Anmeldenummer: 24208002.6
(22) Anmeldetag: 22.10.2024
(51) Int. Cl.: F16H 7/02, F16G 1/28, F16H 55/17

(54) **ZAHNSCHEIBE SOWIE ZAHNRIEMENTRIEB MIT EINER SOLCHEN ZAHNSCHEIBE**

(30) Priorität: 10.11.2023 DE 102023211147
(71) Anmelder: ContiTech Deutschland GmbH, 30175 Hannover (DE)
(72) Erfinder: Dr. Sattler, Heiko, 30175 Hannover (DE); Quass, Jan-Henning, 30175 Hannover (DE); Lorenz, Eduard, 30175 Hannover (DE); Kucharczyk, Andre, 30175 Hannover (DE)
(74) Vertreter: Continental Corporation

(57) **Zusammenfassung**

Die Erfindung betrifft eine Zahnscheibe (1), aufweisend einen Zahnscheibenkörper (3), eine Vielzahl in Umfangsrichtung (U) angeordneter Zähne (2), wobei jeweils zwei Zähne (2) durch einen Zahnzwischenraum (4) voneinander beabstandet sind, und wenigstens zwei Führungselemente (5), wobei das Führungselement (5) in dem Zahnzwischenraum (4) angeordnet ist, wobei die Breite des Führungselements (5) kleiner als eine Zahnbreite (Bz) ist. Das Führungselement (5) ist sich in einer radialen Richtung (R) erstreckend und in Umfangsrichtung (U) von den benachbarten Zähnen (2) beabstandet angeordnet.

## Beschreibung

Die Erfindung betrifft eine Zahnscheibe gemäß dem Oberbegriff des Anspruchs 1. Weiterhin betrifft die Erfindung einen Zahnriementrieb mit einer solchen Zahnscheibe, ein Zweirad mit einem solchen Zahnriementrieb sowie einen Zahnriemen.

Zahnriemen können wesentlich höhere Drehmomente als vergleichbare Flach- oder Keilriemen übertragen, müssen aber in aller Regel durch Führungselemente gegen ein durch Querkräfte verursachtes Ablaufen von den Zahnscheiben gesichert werden. Dies ist insbesondere bei Schrägverzahnungen der Fall, die zwar ein weicheres und geräuschärmeres Laufverhalten zeigen als Geradverzahnungen, die aber eben durch die inhärente Axialkraftkomponente zum Ablaufen von Riemenscheiben neigen können. Aber auch bei geradverzahnten Zahnriementrieben sind Sicherungen gegen Ablaufen durch Querkräfte wichtig, so beispielsweise bei Zahnriemenantrieben von Zweirädern.

Es ist bei Zahnriemenantrieben seit langem bekannt, ein seitliches Abwandern des Riemens durch den Einfluss von Querkräften von einer Riemenscheibe durch speziell ausgebildete Bordscheiben zu verhindern, die die Antriebs- und bzw. oder Abtriebsscheibe seitlich begrenzen und als eine Art mechanischer Anschlag für den Riemen dienen. Nachteiligerweise muss für die Bordscheiben zusätzlicher Bauraum in der Breite bereitgestellt werden, was bei gegebenem Bauraum häufig zu einer Verringerung der Riemenbreite führt, wodurch der Riemen mechanisch geschwächt wird und eine geringere Haltbarkeit aufweist und bzw. oder zur Übertragung geringerer maximaler Leistungen ausgebildet ist.

Will man nun auf den Einsatz solcher Bordscheiben verzichten, etwa um einer zu starken Erwärmung des Riemens durch Reibung vorzubeugen und bzw. oder um Bauraum einzusparen, so muss der Riemen selbst eine gegen seitliches Verrutschen wirkende Führung im Zusammenspiel mit der jeweiligen Riemenscheibe bereitstellen. Dazu ist es erforderlich, dass sogenannte selbstführende Riemen in Längsrichtung ausgebildete Führungselemente aufweisen, etwa in Längsrichtung des Zahnriemens angeordnete Rippen innerhalb der Zahnlücken oder längs gerichtete Vorsprünge oder Ausnehmungen, die in entsprechende Ausnehmungen oder Vorsprünge der jeweiligen Riemenscheiben eingreifen und die Längsführung bereitstellen.

Die EP 2 289 792 A1 zeigt hierzu ein selbstzentrierendes System, bei dem der Riemen mit einer Vertiefung oder Nut in der Mitte seiner Verzahnung ausgebildet ist und die Zahnriemenscheibe einen mittig zwischen den Zahnflanken verlaufenden, vorspringenden Zentrierungssteg oder -flansch aufweist, der beim Umlauf in die Nut des Zahnriemens eingreift. Nachteiligerweise ist die Höhe des Zentrierungsstegs auf die Höhe der Zähne der Zahnriemenscheibe begrenzt. Die maximalen seitlichen Führungskräfte sind durch die limitierte Höhe des Zentrierungsstegs ebenfalls begrenzt.

Ein ähnliches System offenbart die US 2018 003273 A1, bei der ebenfalls zwischen den Zahnflanken der Riemenscheibe eine ansteigende Finne zum Eingriff in eine in der Riemenverzahnung ausgebildete Nut vorgesehen ist. Die in die Riemenscheibe integrierte Finne ist nachteiligerweise aufwändig und teuer in der Herstellung.

Die EP 1724495 A1 offenbart einen Zahnriementrieb mit einem eine Längsnut aufweisenden Zahnriemen und einer mit einem Führungselement ausgebildeten Riemenscheibe zur axialen Führung des Zahnriemens. Das Führungselement kann als ein zur Riemenscheibe separat hergestellter, an mindestens einer Umfangsstelle geteilter Ring ausgebildet sein. Die aneinanderstoßenden Ringabschnitte sind untereinander zu einem in sich geschlossenen Ring form- oder kraftschlüssig verbunden. Der so ausgebildete Ring wird in einer Nut der Riemenscheibe gehalten.

Nachteiligerweise ist die Konstruktion des Führungselements durch Elemente zur form- oder kraftschlüssigen Verbindung zu einem in sich geschlossenen Ring aufwendig und entsprechend teuer in der Herstellung. In der Endmontage des Führungselements mit der Riemenscheibe fällt neben der Verbindung des Führungselements mit der Riemenscheibe als weiterer Verfahrensschritt die zusätzliche Verbindung des Führungselements zu einem in sich geschlossenen Führungsring an.

Alle beschriebenen Lösungen haben zum Nachteil, dass die Kontaktfläche zwischen den Zähnen der Zahnscheibe und den Zähnen des Zahnriemens um die Breite des jeweiligen Führungselements verringert wird, da das Führungselement mit seiner Breite in diese Kontaktfläche an den Zahn der Zahnscheibe mündet. So wird bei Vorhandensein des Führungselements durch Verringerung der Kontaktfläche zur Kraftübertragung zwischen Zahnscheibe und Zahnriemen die durch den Zahnriementrieb maximal übertragbare Kraft verringert.

Der Erfindung liegt die Aufgabe zugrunde, eine Zahnscheibe mit einem Führungselement zur seitlichen Führung eines Zahnriemens in einem Zahnriementrieb bereitzustellen, welche durch die konstruktiven Merkmale kostengünstig herzustellen ist. Zumindest soll eine alternative Lösung zum Stand der Technik bereitgestellt werden. Zusätzlich oder alternativ soll auch bei sehr großen Ausrichtungstoleranzen der Zahnscheiben eines Zahnriementriebs untereinander eine zuverlässige seitliche Führung des Zahnriemens sichergestellt werden können. Zusätzlich oder alternativ soll eine Zahnscheibe mit einem Führungselement bereitgestellt werden, mit welcher in Zusammenwirkung mit einem Zahnriemen die maximale Kraftübertragung im Vergleich zu einer Lösung ohne Führungselement unverändert erhalten bleiben kann.

Die Lösung dieser Aufgabe ergibt sich durch eine Zahnscheibe mit den Merkmalen des unabhängigen Anspruchs 1. Weitere Lösungen ergeben sich durch einen Zahnriementrieb mit einer erfindungsgemäßen Zahnscheibe gemäß den Merkmalen des Anspruchs 7, einen Zahnriemen mit den Merkmalen des Anspruchs 9, sowie ein Fahrrad mit den Merkmalen des Anspruchs 10.

Weitere vorteilhafte Ausbildungen sind in den abhängigen Ansprüchen offenbart, sowie der allgemeinen Beschreibung und den Ausführungsbeispielen zu entnehmen.

Die vorliegende Anmeldung betrifft eine Zahnscheibe, aufweisend einen Zahnscheibenkörper, eine Vielzahl in Umfangsrichtung angeordneter Zähne, wobei jeweils zwei Zähne durch einen Zahnzwischenraum voneinander beabstandet sind, und wenigstens zwei Führungselemente, wobei das Führungselement in dem Zahnzwischenraum angeordnet ist. Die Breite des Führungselements ist kleiner als eine Zahnbreite. Das Führungselement ist sich in einer radialen Richtung erstreckend und in Umfangsrichtung von den benachbarten Zähnen beabstandet angeordnet.

Mit anderen Worten berührt das Führungselement die benachbarten Zähne nicht. So wird die Kraftübertragungsfähigkeit eines die Zahnscheibe umschlingenden und mit der Verzahnung kämmend ineinandergreifenden Zahnriemens durch das Führungselement auf besonders vorteilhafte Weise nicht negativ beeinflusst, da die Kontaktfläche zwischen den Zähnen der Zahnscheibe und den Zähnen des Zahnriemens gegenüber einer Zahnscheibe ohne Führungselement unverändert erhalten bleiben kann.

Die Zahnscheibe und bzw. oder die Führungselemente können aus Kunststoff oder Metall ausgebildet sein.

Die Zahnscheibe kann einteilig oder mehrteilig ausgeführt sein. Zur Vereinfachung der Herstellung der Zahnscheibe ist die Zahnscheibe bevorzugt mehrteilig ausgeführt. Die Einzelteile, z.B. der Grundkörper der Zahnscheibe und die Führungselemente, können auf diese Weise jeweils kostengünstig und mit einfachen Fertigungsverfahren hergestellt werden. Die Fertigung mehrerer Einzelteile, welche im Nachgang zu einer erfindungsgemäßen Zahnscheibe zusammensetzbar oder zusammenfügbar sind, kann insbesondere bei besonders komplexen Geometrien oder Hinterschneidungen der Zahnscheibe zu einer einfacheren und kostengünstigeren Herstellung führen.

Gemäß einem weiteren vorteilhaften Aspekt weist der Zahnzwischenraum über einen Teil einer Zahnbreite zum Inneren der Zahnscheibe weisende Öffnungen zur Abfuhr von Fremdkörpern oder Verschmutzungen auf. Durch die Öffnungen der erfindungsgemäßen Zahnscheibe kann auf vorteilhafte Weise eine Ansammlung von Verunreinigungen vorgebeugt werden, was zu Störungen im Zahneingriff zwischen dem Riemen bzw. dessen Zähnen und der Zahnscheibe führen kann, wodurch es zu einem Überspringen des Riemens gegenüber der Zahnscheibe kommen kann.

Die Zahnscheibe weist einen Zahnscheibenkörper auf, von dem die Zähne der Zahnscheibe in axialer Richtung ein- oder beidseitig auskragend ausgebildet sein können. Die Zahnscheibenzähne sind am Zahnfuß lediglich über einen Teil der Zahnbreite mit dem Zahnscheibenkörper verbunden. Neben der dadurch erreichbaren Gewichtsersparnis lässt sich, angepasst an die jeweilige Belastungssituation und Leistungsübertragung, einerseits eine ausreichende Abstützung und Momentenübertragung durch den Zahnriemen erreichen und andererseits eine sichere und saubere Abfuhr von Verschmutzungen erreichen, da sich durch die Auskragung entsprechend große Öffnungen im Zahnfußbereich bilden.

Vorzugsweise ist die Zahnscheibe symmetrisch ausgebildet, sodass das Führungselement in axialer Richtung mittig der Zahnscheibe angeordnet ist und sich eine Öffnung von dem Zahnscheibenkörper in axialer Richtung nach links und eine Öffnung von dem Zahnscheibenkörper in axialer Richtung nach rechts erstreckt. In diesem Ausführungsbeispiel ergibt sich die maximale Tiefe bzw. Breite der linken Öffnung bzw. der rechten Öffnung aus der Subtraktion der Breite des Zahnscheibenkörpers von der Zahnbreite, dividiert durch zwei.

Gemäß einem weiteren vorteilhaften Aspekt entspricht der Kopfkreisradius des Führungselements wenigstens dem Kopfkreisradius des Zahns. Vorzugsweise ist der Kopfkreisradius des Führungselements bis zu 2 mm größer ausgebildet als der Kopfkreisradius des Zahns.

Je tiefer bzw. größer die in dem Riemen vorhandene Ausnehmung und der in der Ausnehmung aufnehmbare Führungssteg der Riemenscheibe ausgebildet sind, desto besser können seitliche Ablaufkräfte des Riemens von der Riemenscheibe und dem Riemen aufgenommen werden, wodurch die seitliche Führung des Riemens verbessert werden kann. So kann auf vorteilhafte Weise eine gleichmäßige Krafteinleitung in den Zahnriemen über einen möglichst großen Querschnitt erfolgen, wodurch dem Auftreten von Spannungsspitzen im Zahnriemen bzw. dessen Zähnen vorgebeugt werden kann. Durch eine solche Ausbildung des Führungsstegs kann auf die Verwendung von Bordscheiben zur Führung des Zahnriemens in axialer Richtung bzw. in Querrichtung verzichtet und trotzdem auf eine sehr effektive Weise eine Zwangsführung des Zahnriemens erreichet werden.

Gemäß einem weiteren vorteilhaften Aspekt weist das Führungselement eine Fase oder Verrundung auf. Das Führungselement kann mit anderen Worten in radialer Richtung abschnittsweise keilförmig zulaufend oder verrundet ausgebildet sein, wobei sich die Breite des Führungselements in radialer Richtung nach innen vergrößert. Hierdurch kann auf vorteilhafte Weise das Einlaufen des Führungselements in die korrespondierende Ausnehmung des Zahnriemens bei Schiefstellung bzw. bei Versatz einzelner Riemenscheiben zueinander verbessert werden. Zusätzlich oder alternativ können Verschmutzungen und bzw. oder Ablagerungen gezielt in Richtung der Öffnungen zur Schmutzabführung geleitet werden.

Gemäß einem weiteren vorteilhaften Aspekt ist die Zahnscheibe mehrteilig ausgebildet und die Führungselemente sind jeweils in einer Ausnehmung der Zahnscheibe angeordnet.

Mit anderen Worten weisen die Zahnzwischenräume der Zahnscheibe jeweils eine Ausnehmung in dem Zahnscheibenkörper zur Aufnahme eines Führungselements auf. Auf besonders vorteilhafte Weise können die Führungselemente von den Zähnen der Zahnscheibe beabstandet angeordnet bzw. aufgenommen bzw. fixiert werden, sodass die Kontaktfläche der Zähne der Zahnscheibe zur Krafteinleitung in einen Zahnriemen unverändert bestehen bleiben kann. Dies kann insbesondere für Anwendungen mit besonders hohen zu übertragenen Leistungen bzw. Kräften und bzw. oder einem gleichzeitig begrenzt zur Verfügung stehenden Bauraum von Vorteil sein.

Die Ausnehmungen können auch untereinander als eine in Umfangsrichtung umlaufende Nut verbunden sein. Die Nut kann die Zähne der Zahnscheibe durchlaufen, wodurch die Zähne der Zahnscheibe in ein in axialer Richtung betrachtet linkes Zahnsegment und ein rechtes Zahnsegment aufgeteilt werden. Der Aufwand zur Herstellung der Zahnscheibe kann durch eine umlaufende Nut im Vergleich zu in den Zahnzwischenräumen einzeln angeordneten Ausnehmungen vereinfacht werden.

Gemäß einem weiteren vorteilhaften Aspekt sind die Führungselemente einander beabstandet auf wenigstens einem Grundkörper angeordnet, wobei der Grundkörper in der die Ausnehmungen der Zahnscheibe verbindenden Nut einsetzbar ist. Der Grundkörper kann ringförmig oder zur Vereinfachung der Montage segmentiert ausgebildet sein. Die Segmente können auch einander beabstandet über den Umfang der Zahnscheibe angeordnet sein. Beispielsweise entspricht die Anzahl der Führungselemente einem ganzzahligen Teiler der Anzahl der Zähne des Zahnriemens. Insbesondere kann bei vergleichsweise geringen Axialkräften eine geringe Anzahl von Führungselementen für eine zuverlässige seitliche Führung des Zahnriemens ausreichend sein. In einer solchen Ausführungsform müssen nur entsprechend wenige Zähne des Zahnriemens eine Ausnehmung aufweisen, wodurch der Aufwand für das ggfs. nachträgliche Einbringen der Ausnehmungen in den Zahnriemen und bzw. oder die Zahnscheibe geringgehalten werden kann. Die mechanische Schwächung des Zahnriemens kann mit geringerer Anzahl darin eingebrachter Ausnehmungen ebenfalls geringgehalten werden.

Der Grundkörper bzw. die Führungselemente können gegenüber den Ausnehmungen bzw. der Nut der Zahnscheibe ein Übermaß aufweisen. Zusätzlich oder alternativ können die Führungselemente bzw. der Grundkörper mit der Zahnscheibe formschlüssig oder kraftschlüssig oder stoffschlüssig verbunden werden. Hierzu seien beispielsweise Schraubverbindungen, Schweiß- oder Klebeverbindungen genannt. Durch eine feste Anordnung der Grundkörper bzw. der Führungselemente an der Zahnscheibe kann eine zusätzliche Verbindung der einzelnen Grundkörper bzw. Führungselemente untereinander entfallen. Die Anzahl der Führungselemente entspricht mindestens der Anzahl der segmentierten Grundkörper. Mit anderen Worten weist jeder Grundkörper wenigstens ein Führungselement auf.

Die vorliegende Anmeldung betrifft außerdem einen Zahnriementrieb mit einer erfindungsgemäßen Zahnscheibe und einem Zahnriemen, wobei wenigstens zwei Zähne des Zahnriemens durch eine Ausnehmung in zwei in axialer Richtung zueinander beabstandete Zahnsegmente geteilt sind, wobei das Führungselement der Zahnscheibe ausgebildet ist, in die Ausnehmung des Zahnriemens einzugreifen und den Zahnriemen in axialer Richtung zu führen.

Die zuvor genannten Eigenschaften und Vorteile lassen sich so auf jeden beliebigen Zahnriementrieb übertragen, der vorzugsweise in einer verschmutzten Umgebung eingesetzt werden kann. Die Ausnehmungen des Zahnriemens können jeweils einzeln je Zahn eingebracht sein. In einer weiteren Ausführungsform kann der Zahnriemen eine in der Herstellung kostengünstig einbringbare umlaufende Nut aufweisen.

Gemäß einem weiteren Aspekt entspricht die Anzahl der Führungselemente einem ganzzahligen Teiler der Anzahl der Zähne des Zahnriemens. So kann bei Anordnung nur vereinzelter Führungselemente bzw. damit korrespondierender Ausnehmungen des Zahnriemens auf vorteilhafte Weise sichergestellt werden, dass bei einer Umdrehung der Zahnscheibe ein Führungselement einer Ausnehmung des Zahnriemens zugeordnet ist.

Die vorliegende Anmeldung betrifft außerdem einen Zahnriemen in einem erfindungsgemäßen Zahnriementrieb.

Weiterhin betrifft die Anmeldung ein Fahrrad mit einem erfindungsgemäßen Zahnriementrieb. Die zuvor genannten Eigenschaften und Vorteile lassen sich auf ein Fahrrad sowie deren Derivate mit einem erfindungsgemäßen Zahnriementrieb übertragen. Der Zahnriementrieb eines Fahrrads ist einer staubigen oder schmutzigen Umgebung in der Regel ungeschützt ausgesetzt. Die erfindungsgemäße Ausführung stellt eine sichere Riemenführung sowie eine ausreichende Leistungsübertragung auch bei Verschmutzungen bereit.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 kombinierbar sind.

Anhand der Zeichnungen werden im Folgenden Ausführungsbeispiele der Erfindung schematisch dargestellt und näher erläutert.

Darin zeigt:
Fig. 1 eine erfindungsgemäße Zahnscheibe, ausgebildet zur Aufnahme von Führungselementen.
Fig. 2 einen halbkreisförmigen Grundkörper mit Führungselementen.
Fig. 3 eine erfindungsgemäße Zahnscheibe mit in Zahnzwischenräumen angeordneten Führungselementen.
Fig. 4 einen abschnittsweise dargestellten Zahnriemen.
Fig. 5 einen abschnittsweise dargestellten erfindungsgemäßen Zahnriementrieb.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U. Die Längsachse X, die radiale Richtung R und die Umfangsrichtung U können gemeinsam auch als Raumrichtungen X, R, U bzw. als zylindrische Raumrichtungen X, R, U bezeichnet werden.

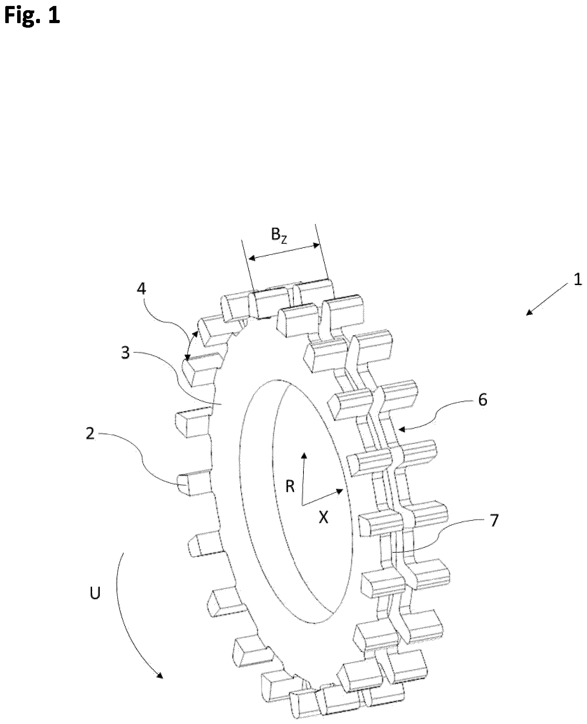

Die in Figur 1 schematisch dargestellte Zahnscheibe 1 weist in Umfangsrichtung U voneinander in einer Zahnteilung beabstandete Zähne 2 auf. Die Zahnscheibe 1 weist einen Zahnscheibenkörper 3 auf, von welchem die Zähne 2 in radialer Richtung R und axialer Richtung X auskragend ausgebildet sind. Die Zähne 2 weisen eine Zahnbreite Bz auf. Zwischen jeweils zwei Zähnen 2 ist ein Zahnzwischenraum 4 gebildet. Die Zahnscheibe 1 weist in dem dargestellten Ausführungsbeispiel eine in Umfangsrichtung U umlaufende Nut 7 auf. Die Zahnscheibe 1 weist zwischen zwei Zähnen 2 jeweils links und rechts des Zahnscheibenkörpers 3 eine Öffnung 6 zur Schmutzabführung auf. Die Größe der linken und rechten Öffnung 6 zusammen ergibt sich aus der Subtraktion der Breite des Zahnscheibenkörpers 3 von der Zahnbreite Bz. Da die Zahnscheibe 1 symmetrisch ausgebildet ist, ist der Zahnscheibenkörper 3 mittig angeordnet, sodass sich die Öffnung 6 von dem Zahnscheibenkörper 3 in axialer Richtung X nach links und von dem Zahnscheibenkörper 3 in axialer Richtung nach rechts erstreckt. So ergibt sich die maximale Tiefe der linken Öffnung 6 bzw. der rechten Öffnung 6 aus der Subtraktion der Breite des Zahnscheibenkörpers 3 von der Zahnbreite B_{Z}, dividiert durch zwei.

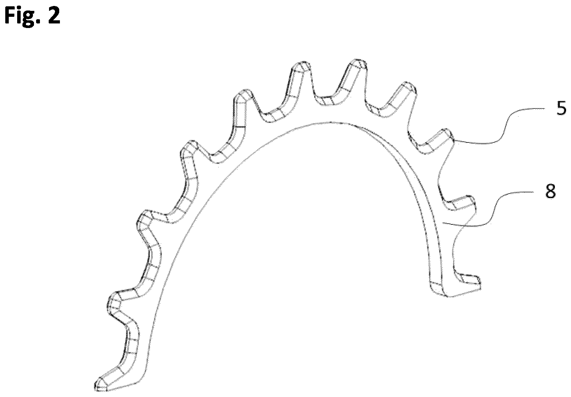

Die Figur 2 zeigt schematisch dargestellt einen Grundkörper 8 mit zueinander beabstandeten Führungselementen 5. Der Grundkörper 8 ist halbkreisförmig ausgebildet. Die Führungselemente 5 sind an den radial außenliegenden Kanten angefast.

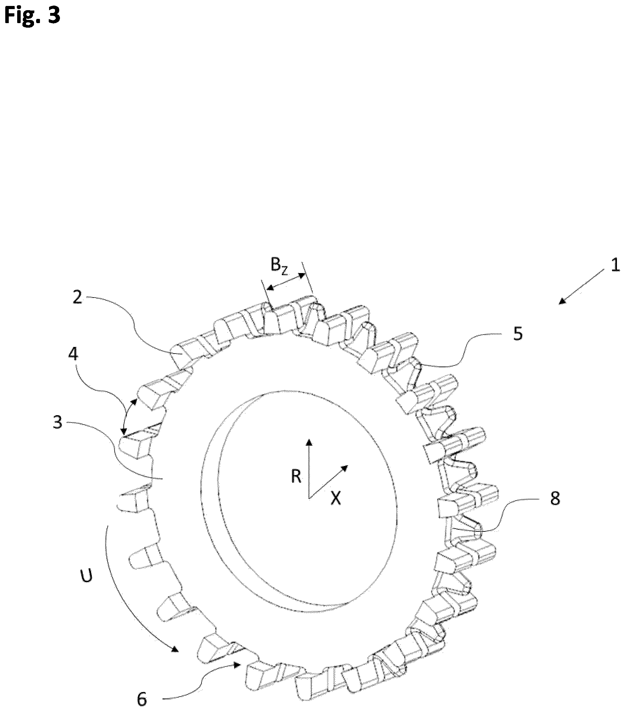

Figur 3 zeigt die erfindungsgemäße Zahnscheibe 1 aus Figur 1 mit in den Zahnzwischenräumen 4 angeordneten Führungselementen 5. Die Führungselemente 5 sind durch den in Figur 2 dargestellten Grundkörper 8 miteinander verbunden. Der Grundkörper 8 ist in der Nut 7 der Zahnscheibe 1 angeordnet. Die Anordnung der Führungselemente 5 in jedem Zahnzwischenraum 4 über den gesamten Umfang U der Zahnscheibe 1 ergibt sich durch die Anordnung von zwei halbkreisförmigen Grundkörpern 8 in der Nut 7 der Zahnscheibe 1. Die Höhe bzw. der Kopfkreisradius der Führungselemente 5 entspricht in radialer Richtung R der Höhe bzw. dem Kopfkreisradius der Zähne 2.

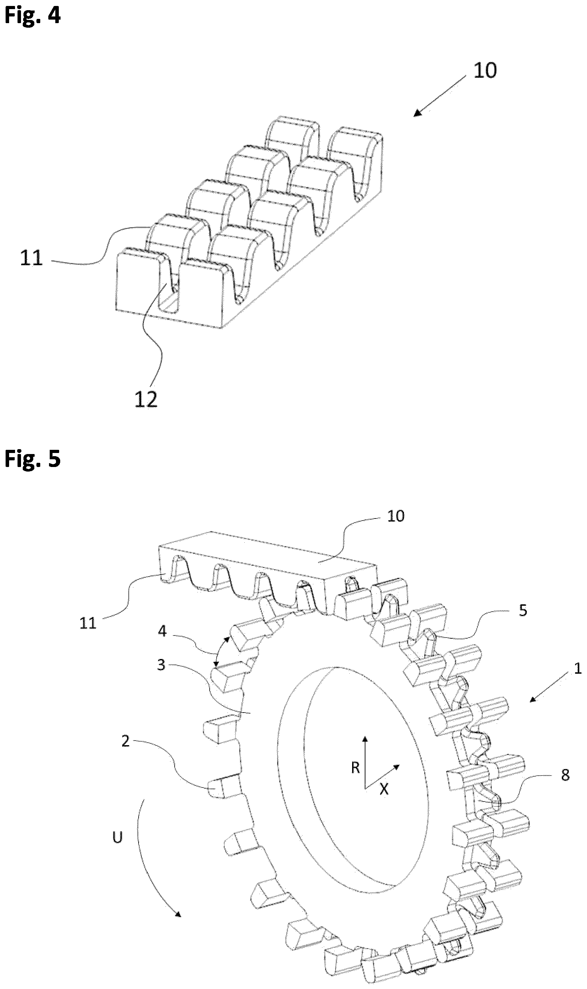

Fig. 4 zeigt schematisch einen abschnittsweise dargestellten Zahnriemen 10 mit einer mittig verlaufenden Ausnehmung 12, die die Zähne 11 in ein linkes und ein rechtes Zahnsegment teilt.

Fig. 5 zeigt schematisch einen abschnittsweise dargestellten erfindungsgemäßen Zahnriementrieb, aufweisend die Zahnscheibe 1 aus Figur 3 und den Zahnriemen 10 aus Figur 4. Die Zähne 2 der Zahnscheibe 1 stehen zum Teil mit den Zähnen 11 des Zahnriemen 10 kämmend miteinander im Eingriff. Das Führungselement 6 der Zahnscheibe 1 ist in der Ausnehmung 12 des Zahnriemen 10 aufgenommen und führt den Zahnriemen 10 in axialer Richtung X.

### Bezugszeichenliste (Teil der Beschreibung)

- 1: Zahnscheibe
- 2: Zahn
- 3: Zahnscheibenkörper
- 4: Zahnzwischenraum
- 5: Führungselement
- 6: Öffnung
- 7: Ausnehmung, Nut
- 8: Grundkörper
- 10: Zahnriemen
- 11: Zahn
- 12: Ausnehmung

- Bz: Zahnbreite
- R: radiale Richtung
- U: Umfangsrichtung
- X: Längsachse, axiale Richtung

## Patentansprüche

1. Zahnscheibe (1), aufweisend einen Zahnscheibenkörper (3), eine Vielzahl in Umfangsrichtung (U) angeordneter Zähne (2), wobei jeweils zwei Zähne (2) durch einen Zahnzwischenraum (4) voneinander beabstandet sind, und wenigstens zwei Führungselemente (5), wobei das Führungselement (5) in dem Zahnzwischenraum (4) angeordnet ist, wobei die Breite des Führungselements (5) kleiner als eine Zahnbreite (Bz) ist,
**dadurch gekennzeichnet, dass**
das Führungselement (5) sich in einer radialen Richtung (R) erstreckend und in Umfangsrichtung (U) von den benachbarten Zähnen (2) beabstandet angeordnet ist.

2. Zahnscheibe (1) nach Anspruch 1,
**dadurch gekennzeichnet, dass**
der Zahnzwischenraum (4) über einen Teil einer Zahnbreite (Bz) zum Inneren der Zahnscheibe (1) weisende Öffnungen (6) zur Abfuhr von Fremdkörpern oder Verschmutzungen aufweist.

3. Zahnscheibe (1) nach einem der vorhergehenden Ansprüche,
**dadurch gekennzeichnet, dass**
der Kopfkreisradius des Führungselements (5) wenigstens dem Kopfkreisradius des Zahns (2) entspricht, vorzugsweise bis zu 2 mm größer ausgebildet ist.

4. Zahnscheibe (1) nach einem der vorhergehenden Ansprüche,
**dadurch gekennzeichnet, dass**
das Führungselement (5) eine Fase oder Verrundung aufweist.

5. Zahnscheibe (1) nach einem der vorhergehenden Ansprüche,
**dadurch gekennzeichnet, dass**
die Zahnscheibe (1) mehrteilig ausgebildet ist und die Führungselemente (5) jeweils in einer Ausnehmung (7) der Zahnscheibe (1) angeordnet sind.

6. Zahnscheibe (1) nach einem der vorhergehenden Ansprüche,
**dadurch gekennzeichnet, dass**
die Führungselemente (5) einander beabstandet auf wenigstens einem Grundkörper (8) angeordnet sind, wobei der Grundkörper (8) in einer die Ausnehmungen (7) der Zahnscheibe (1) verbindenden Nut (7) einsetzbar ist.

7. Zahnriementrieb mit einer Zahnscheibe (1) nach einem der Ansprüche 1 bis 6 und einem Zahnriemen (10), wobei wenigstens zwei Zähne (11) des Zahnriemens (10) durch eine Ausnehmung (12) in zwei in axialer Richtung (X) zueinander beabstandete Zahnsegmente geteilt sind,
wobei das Führungselement (5) der Zahnscheibe (1) ausgebildet ist, in die Ausnehmung (12) des Zahnriemens (10) einzugreifen und den Zahnriemen (14) in axialer Richtung (X) zu führen.

8. Zahnriementrieb nach Anspruch 7,
**dadurch gekennzeichnet, dass**
die Anzahl der Führungselemente (5) einem ganzzahligen Teiler der Anzahl der Zähne (11) des Zahnriemens (10) entspricht.

9. Zahnriemen (10) in einem Zahnriementrieb nach einem der Ansprüche 7 bis 8.

10. Fahrrad mit einem Zahnriementrieb nach einem der Ansprüche 7 bis 9.
